# EUROPÄISCHE PATENTSCHRIFT

(11) **EP 3 131 728 B1**
(45) Veröffentlichungstag und Bekanntmachung des Hinweises auf die Patenterteilung: **22.09.2021**
(21) Anmeldenummer: 15716047.4
(22) Anmeldetag: 14.04.2015
(51) Int. Cl.: B29C 45/04, B29C 45/16, B29C 45/26

(54) **SPRITZGIESSVORRICHTUNG**
INJECTION MOLDING DEVICE
DISPOSITIF DE MOULAGE PAR INJECTION

(30) Priorität: 17.04.2014 CH 598142014
(43) Veröffentlichungstag der Anmeldung: 22.02.2017
(73) Patentinhaber: Foboha (Germany) GmbH, 77716 Haslach (DE)
(72) Erfinder: ARMBRUSTER, Rainer, 77709 Wolfach (DE)
(74) Vertreter: Rentsch Partner AG
(86) Internationale Anmeldenummer: PCT/EP2015/058047
(87) Internationale Veröffentlichungsnummer: WO 2015/158702

(56) Entgegenhaltungen:
- EP-A2- 1 782 936
- WO-A1-2011/107395
- WO-A1-2013/001022
- US-A1- 2013 302 457

## Beschreibung

Die vorliegende Erfindung liegt auf dem Gebiet der Werkzeuge und Maschinen zum Spritzgiessen von Kunststoff und anderen thermoplastischen Materialien.

Aus dem Stand der Technik sind Spritzgiessvorrichtungen mit einem oder mehreren drehenden Mittelteilen bekannt. Diese werden zur effizienten Herstellung von mehrkomponentigen Kunststoffteilen durch Spritzgiessen verwendet. Zwischen zwei entlang von Holmen gegeneinander in einer ersten Richtung verfahrbaren Formhälften ist mindestens ein drehbares Formmittelteil (Mittelblock) angeordnet, das an einer Haltevorrichtung befestigt und um eine Drehachse drehbar angeordnet ist. Das drehbare Formmittelteil weist mindestens zwei parallele Seitenflächen auf, entlang derer es mit den beiden Formhälften zur Bildung von Kavitäten zusammenwirkt. In gewissen Ausführungsformen kann der drehbare Formmittelteil zumindest auf einer Seite mit einem weiteren drehbaren Formmittelteil zusammenwirken. Koordinationsmittel bewirken, dass der drehbare Formmittelteil beim Öffnen und beim Schliessen mittig zwischen den beiden Formhälften positioniert bleibt und so Kollisionen vermieden werden können. Aus dem Stand der Technik sind diverse Haltevorrichtungen für den drehbaren Mittelteil bekannt.

EP1035959 und EP1155802 derselben Anmelderin wurden 1999 publiziert und betreffen beide eine Haltevorrichtung für ein drehbares Mittelteil (Form, Formhälfte, Formträger). Die Haltevorrichtung weist eine untere und eine obere Traverse auf, welche entlang der Holme einer Spritzgiessmaschine geführt sind. Jede Traverse der Haltevorrichtung weist ein drehbares Haltemittel auf, welches zum lösbaren Einspannen der Form, Formhälfte oder des Formträgers dazwischen dient.

EP1725386 derselben Anmelderin wurde 2005 publiziert und betrifft ein Verfahren und eine Spritzgiessvorrichtung mit mehr als einem drehbaren Mittelteil. Damit besteht die Möglichkeit, Teile in zwei äusseren Trennebenen herzustellen und diese in einem weiteren Verarbeitungsschritt in einer weiteren Trennebene zu montieren. In den Figuren sind unterschiedliche Ausgestaltungen von Haltevorrichtungen für die drehbaren Mittelteile dargestellt.

WO2011/107395 derselben Anmelderin wurde 2011 publiziert und beschreibt eine Haltevorrichtung mit modularem Aufbau, welche flexibel auf unterschiedliche Spritzgiessmaschinen angepasst werden kann. Es werden unterschiedliche Arten der Halterung beschrieben.

WO2013/001022 derselben Anmelderin wurde 2013 publiziert und beschreibt eine Haltevorrichtung für einen drehbaren Mitteil. Der Mittelteil ist auf einer drehfest angeordneten Säule gelagert, welche im Innern Versorgungskanäle aufweist.

EP1119449 von der Fa. Krauss Maffei wurde 2001 erstmals publiziert und zeigt eine Zweiplatten-Horizontalspritzgiessmaschine. Diese weist eine auf dem Maschinenbett gelagerte Haltevorrichtung für einen drehbaren Mittelteil auf. Die Erfindung besteht darin, dass die Haltevorrichtung komplett von den Holmen losgelöst und mit diesen keine Wirkverbindung aufweist. Alle auftretenden Kräfte werden über das Maschinenbett übertragen.

Eine andere Klasse von Spritzgiessvorrichtungen weist einen nicht drehbaren Mitteil auf, um den ein Transfersystem beweglich angeordnet ist. Das Transfersystem dient dazu, Teile aus Kavitäten einer ersten Trennebene herauszuheben und in Kavitäten einer zweiten Trennebene einzubringen, wo sie einem weiteren Bearbeitungsschritt unterzogen werden.

EP0070189 wurde 1984 im Namen der Sumitomo Heavy Industries publiziert und betrifft eine Spritz-Blasformvorrichtung mit einem drehfest angeordneten Mittelteil. Ein Transfersystem ist unten und oben am Mittelteil drehbar gelagert. Es dient dazu, Teile, welche in einer ersten Trennebene durch Spritzgiessen hergestellt wurden, in eine zweite Trennebene zu bewegen, wo sie durch Blasformen umgeformt werden. Das Transfersystem ist Teil der Spritzgiessvorrichtung und verbleibt während dem Herstellen der Teile bei geschlossener Vorrichtung im Innern desselben.

EP1174242 wurde 2002 im Namen der Fa. Hekuma GmbH publiziert und zeigt eine Spritzgiessvorrichtung der eingangs erwähnten Art mit einer ausserhalb angeordneten Transfervorrichtung, welche von aussen her zwischen die beiden Trennebenen einfährt.

DE10121691 wurde 2002 im Namen der Fa. Zahoransky Formenbau GmbH veröffentlicht. Beschrieben wird eine Spritzgiessvorrichtung der eingangs beschriebenen Art. Das Transfersystem basiert auf einem um die mittlere Formhälfte angeordneten Kettenantrieb mit zwei Ketten, welche um zwei Drehachsen umlaufen und die Teile parallel zu den beiden Kavitätenhälften umfassenden Seitenflächen der mittleren Formhälfte bewegen. Die Ketten sind in zwei parallel angeordneten Schlitzen angeordnet. Die hergestellten Teile bleiben beim Transfer an einem beweglichen Bereich der Kavitäten haften, welcher an einem Hubsystem befestigt ist.

EP1782936 wurde im Mai 2007 im Namen der Fa. Wilden Handels AG veröffentlicht. Die Publikation beschreibt eine Spritzgiessvorrichtung der eingangs beschrieben Art. Die mittlere Formhälfte besteht aus einem Unterteil und einem Oberteil, welche durch einen Schlitz voneinander getrennt sind. In diesem Schlitz ist ein Transfersystem angeordnet, welches zum Transfer der Teile von einer ersten in eine zweite Trennebene dient. Das Transfersystem dreht um eine einzige Achse. Über den Aufbau der Spritzgiessvorrichtung sind keine Details bekannt.

WO07082394 wurde im Juli 2007 im Namen derselben Anmelderin publiziert. Die Publikation beschreibt ebenfalls eine Spritzgiessvorrichtung der eingangs erwähnten Art mit einer mittleren Formhälfte und einem formintegrierten Transfersystem. Die mittlere Formhälfte weist ein Unterteil und ein Oberteil auf, welche durch einen Schlitz voneinander getrennt sind. Das Transfersystem dreht um eine zentrisch angeordnete Drehachse. Bereiche der Kavitäten sind an radial verstellbaren Auslegerarmen befestigt, welche im Schlitz zwischen dem Unterteil und dem Oberteil angeordnet sind.

WO07085063 wurden im August 2007 im Namen der Fa. Boucherie NV G B veröffentlicht. Auch dieses Dokument befasst sich mit einer Spritzgiessvorrichtung der eingangs beschriebenen Gattung. Die in dieser Publikation beschriebene Vorrichtung ähnelt bezüglich dem Aufbau des Transfersystems stark der aus EP0070189. Beide weisen ein Transfersystem auf, welches unten und oben an der mittleren Formhälfte drehbar befestigt ist.

Eine Aufgabe der Erfindung besteht darin, eine Spritzgiessvorrichtung zu zeigen, welche eine besonders effiziente und flexible Herstellung von komplizierten Teilen ermöglicht.

In einer Ausführungsform umfasst die Erfindung eine Spritzgiessvorrichtung mit mindestens einer ersten und mindestens einer zweiten äusseren Formhälfte , welche in einer ersten Richtung gegeneinander verschiebbar angeordnet sind. Zwischen diesen ist ein um eine Drehachse drehbares Mittelteil angeordnet, welches ein Unterteil aufweist. An diesem sind zwei oder vier paarweise zueinander angeordnete erste innere Formhälften angebracht. Weiterhin umfasst das drehbare Mittelteil ein Oberteil, welches in der Regel unabhängig vom Unterteil drehbar ist. An diesem sind zwei oder vier paarweise zueinander angeordnete zweite innere Formhälften angebracht. Diese wirken in einer Schliessstellung mit ihnen zugeordneten ersten und zweiten äusseren Formhälften zur Bildung von Kavitäten zuren Auslegerarmen befestigt, welche im Schlitz zwischen dem Unterteil und dem Oberteil angeordnet sind.

WO07085063 wurden im August 2007 im Namen der Fa. Boucherie NV G B veröffentlicht. Auch dieses Dokument befasst sich mit einer Spritzgiessvorrichtung der eingangs beschriebenen Gattung. Die in dieser Publikation beschriebene Vorrichtung ähnelt bezüglich dem Aufbau des Transfersystems stark der aus EP0070189. Beide weisen ein Transfersystem auf, welches unten und oben an der mittleren Formhälfte drehbar befestigt ist.

US2013302457A1**,** veröffentlicht am 14. November 2013 im Namen von Zahoransky Formenbau GmbH betrifft eine Spritzgiessmaschine mit einer Etagenform zur Herstellung von Spritzgiessteilen, mit einem ersten und einem zweiten äußeren Formteil und einem drehbar gelagerten Mittelblock, wobei die äußeren Formteile jeweils eine Verteilerplatte mit einem Heißkanal für das Spritzgießmaterial aufweisen und Formhohlräume zwischen Formbereichen auf Innenseiten der Formplatten der äußeren Formteile und Formbereiche auf Formplatten auf gegenüberliegenden Außenseiten des Mittelblocks ausgebildet sind.

Eine Aufgabe der Erfindung besteht darin, eine Spritzgiessvorrichtung zu zeigen, welche eine besonders effiziente und flexible Herstellung von komplizierten Teilen ermöglicht.

Die Erfindung umfasst eine Spritzgiessvorrichtung mit mindestens einer ersten und mindestens einer zweiten äusseren Formhälfte , welche in einer ersten Richtung gegeneinander verschiebbar angeordnet sind. Zwischen diesen ist ein um eine Drehachse drehbares Mittelteil angeordnet, welches ein Unterteil aufweist. An diesem sind zwei oder vier paarweise zueinander angeordnete erste innere Formhälften angebracht. Weiterhin umfasst das drehbare Mittelteil ein Oberteil, welches unabhängig vom Unterteil drehbar ist.

An diesem sind zwei oder vier paarweise zueinander angeordnete zweite innere Formhälften angebracht. Diese wirken in einer Schliessstellung mit ihnen zugeordneten ersten und zweiten äusseren Formhälften zur Bildung von Kavitäten zusammen. Die ersten und die zweiten inneren Formhälften und die ihnen zugeordneten ersten und zweiten äusseren Formhälften bilden eine untere und eine obere Herstellungsebene.

Die Erfindung ermöglicht es sehr komplexe Teile in einer Vorrichtung herzustellen. Z.B. werden in der unteren Herstellungsebene im Bereich der ersten Trennebene ein oder gleichzeitig mehrere erste Teile gefertigt, welche dann beim Öffnen der Spritzgiessvorrichtung an den ersten inneren Formhälften haften bleiben und durch Drehen des unteren drehbaren Mittelteils (auch Unterteil genannt) um die Drehachse 17 von der ersten in die zweite Trennebene gefördert wird.

Nach erneutem Schliessen der Spritzgiessvorrichtung werden die Teile z.B. mit einer weiteren oder derselben Materialkomponente überspritzt, bzw. wirkverbunden. Während dem Drehen von der ersten in die zweite Trennebene können weitere Teile, z.B. von aussen mit einem Handlingsystem zugeführte Teile, mit den ersten Teilen wirkverbunden und/oder in die Kavitäten eingelegt werden.

Derselbe oder ein anderer Prozess kann auf der oberen Herstellungsebene ablaufen. Weiterhin besteht die Möglichkeit, die Teile aus der unteren in die obere Herstellungsebene zu befördern (oder umgekehrt) um dort einem oder mehreren weiteren Bearbeitungsschritten zu unterziehen. Alternativ oder in Ergänzung können Teil aus der unteren und Teile aus der oberen Herstellungsebene auch erst aus der Spritzgiessvorrichtung entnommen und ausserhalb miteinander wirkverbunden werden. Beliebige weitere Ausführungsformen von Herstellungsprozessen sind mit der erfindungsgemässen Spritzgiessvorrichtung 1 einfach zu realisieren. Zum Transportieren der Teile von der ersten in die zweite Herstellungsebene und umgekehrt kann eine oder mehrere Handlingvorrichtungen vorgesehen werden. Diese sind mit Vorteil seitlich neben der Spritzgiessvorrichtung angeordnet.

Eine Variante der erfindungsgemässen Spritzgiessvorrichtung weist eine Haltevorrichtung auf, welche zur Halterung des drehbaren Mittelteils in der Spritzgiessmaschine dient. Die Haltevorrichtung kann eine Säule aufweisen, um welche das Mittelteil drehbar angeordnet ist. In einer bevorzugten Variante ist das Mittelteil mehrteilig ausgestaltet und umfasst ein Unterteil und ein Oberteil, welche vorzugsweise unabhängig voneinander drehbar sind.

Die Säule kann z.B. an ihrem unteren Ende an einer unteren Haltevorrichtung befestigt sein. Die untere Haltevorrichtung kann über Linearlager auf Schienen z.B. auf einem Maschinenbett der Spritzgiessmaschine direkt oder indirekt abgestützt sein. Alternativ oder in Ergänzung kann die untere Haltevorrichtung über erste Lagerschalen gegenüber Holmen gelagert sein, z.B. zur Aufnahme eines Drehmomentes. Die untere Haltevorrichtung kann einen unteren Mittelblock aufweisen, an dem direkt oder indirekt die Linearlager und/oder die ersten Lagerschalen befestigt sind. Mit Vorteil sind die Linearlager und/oder die ersten Lagerschalen über erste Adapter am unteren Mittelblock befestigt. Die Adapter können verstellbar ausgestaltet sein. Ein Vorteil besteht darin, dass die Mittelblöcke für unterschiedliche Ausführungsformen verwendet werden können. Mit Vorteil wird der Unterteil über einen unteren Antriebsmotor und ein unteres Getriebe um die Drehachse drehbar angetrieben.

Die Säule kann an ihrem oberen Ende an einer oberen Haltevorrichtung befestigt sein. Die obere Haltevorrichtung kann über zweite Lagerschalen gegenüber oberen Holmen, z.B. der Spritzgiessmaschine gelagert sein. Die obere Haltevorrichtung kann einen oberen Mittelblock aufweisen, an dem direkt oder indirekt die zweiten Lagerschalen befestigt sind. Die zweiten Lagerschalen können über zweite Adapter am oberen Mittelblock befestigt sein. Der Oberteil wird in der Regel über einen oberen Antriebsmotor und ein oberes Getriebe um die Drehachse drehbar angetrieben. Die Säule kann im Innern mindestens einen Kanal aufweisen, welcher zum Austausch von Medien mit dem Mittelteil dient. Der mindestens eine Kanal mündet in der Regel in mindestens einer Nut, welche zwischen der Säule und dem Mittelteil angeordnet ist.

Anhand der in den nachfolgenden Figuren gezeigten Ausführungsbeispiele und der dazugehörigen Beschreibung werden Aspekte der Erfindung näher erläutert. Es zeigen:
- Fig. 1: eine Spritzgiessvorrichtung in einer perspektivischen Darstellung von schräg vorne und oben;
- Fig. 2: die Spritzgiessvorrichtung in einer perspektivischen Darstellung von schräg unten und hinten;
- Fig. 3: die Spritzgiessvorrichtung in einer Seitenansicht;
- Fig. 4: die Spritzgiessvorrichtung in einer Schnittdarstellung entlang der Schnittlinie FF gemäss Figur 3;
- Fig. 5: die Spritzgiessvorrichtung in einer perspektivischen Darstellung und teilweise geschnitten, so dass das Innenleben sichtbar wird.

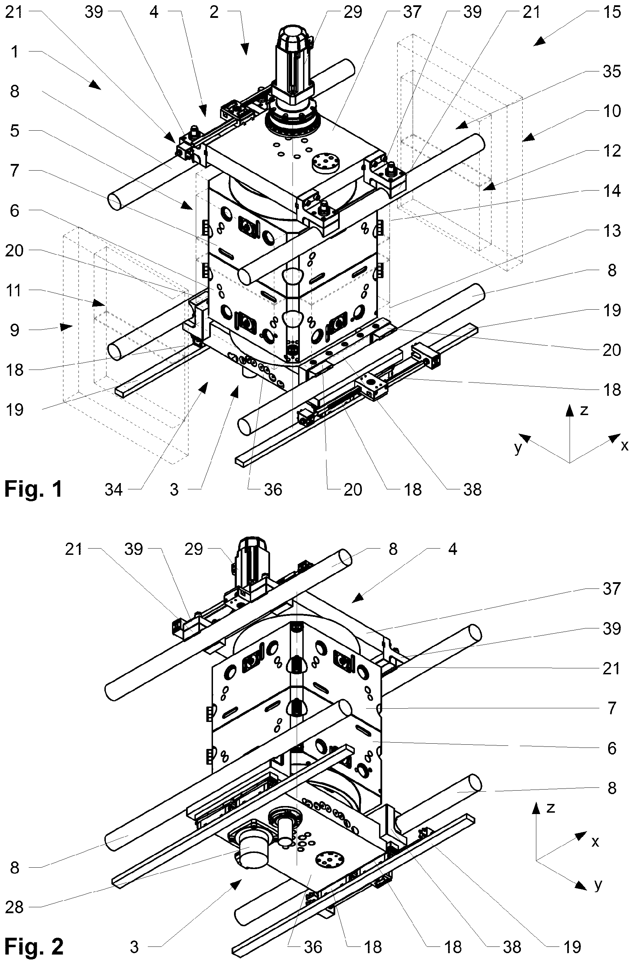

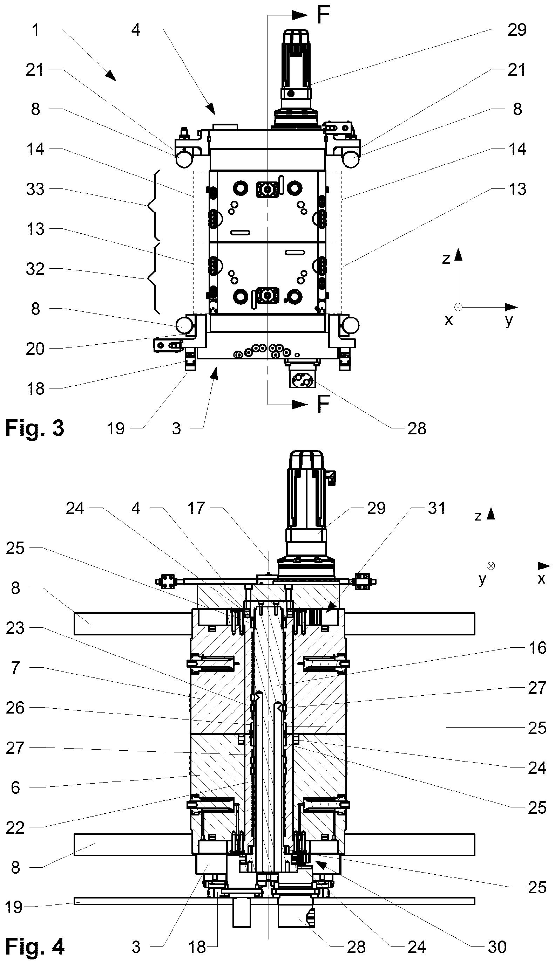

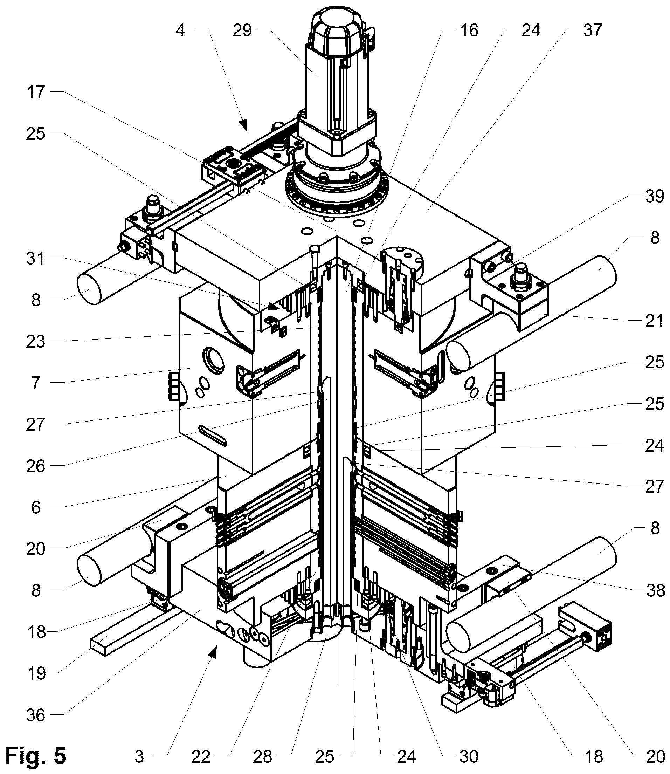

**Figur 1** zeigt eine Ausführungsform einer erfindungsgemässen Spritzgiessvorrichtung 1 in einer perspektivischen Darstellung von schräg oben und vorne in geöffnetem Zustand. **Figur 2** zeigt dieselbe Spritzgiessvorrichtung 1 von schräg hinten und unten. **Figur 3** zeigt die Spritzgiessvorrichtung 1 in einer Seitenansicht. **Figur 4** zeigt eine Schnittdarstellung durch die Spritzgiessvorrichtung 1 entlang der Schnittlinie FF gemäss **Figur 3****.** **Figur 5** zeigt die Spritzgiessvorrichtung 1 in einer perspektivischen Ansicht teilweise geschnitten, so dass das Innenleben besser sichtbar wird.

In den Figuren sind nicht alle Teile der Spritzgiessvorrichtung 1 dargestellt, sondern nur die für das Verständnis der Funktion der Erfindung wesentlichen Teile davon. Die nicht dargestellten Teile werden kurz erwähnt.

Die Spritzgiessvorrichtung 1 umfasst eine Haltevorrichtung 2 für ein mehrteiliges drehbares Mittelteil 3, welches in der Spritzgiessvorrichtung 1 zwischen zwei entlang von Holmen 8 einer handelsüblichen Spritzgiessmaschine gegeneinander in einer ersten Richtung (x-Richtung) verfahrbaren Formaufspannplatten 9, 10 angeordnet ist. An den Formaufspannplatten 9, 10 sind ein oder mehrteilig ausgestaltete äussere Formhälften 11, 12 eines Spritzgiesswerkzeuges 15 befestigt. Ein Spritzgiesswerkzeug 15 weist im vorliegenden Fall neben den ersten und den zweiten äusseren Formhälften 11, 12 in der Regel am Unterteil 6 bzw. am Oberteil 7 des drehbaren Mittelteils 5 paarweise einander gegenüberliegend angeordnete erste und zweite innere Formhälften 13, 14 auf, welche in einer Schliessstellung der Spritzgiessvorrichtung zur Produktion von Teilen (nicht dargestellt) mit den ersten und den zweiten äusseren Formhälften 11, 12 zur Bildung von Kavitäten (nicht dargestellt) zusammenwirken.

Wie in **Figur 1** zu erkennen ist, sind die ersten inneren Formhälften 13 am Unterteil 6 und die zweiten inneren Formhälften 14 am Oberteil 7 des mehrteiligen ausgestalteten drehbaren Mittelteils 5 angebracht. Das Unterteil 6 und das Oberteil 7 sind um eine in der gezeigten Ausführungsform drehfest angeordnete Säule 16 um eine Drehachse 17 drehbar gelagert. Die Drehachse 17 ist zur ersten Richtung in der Regel im Wesentlichen rechtwinklig angeordnet.

Wie insbesondere in den **Figuren 4** und **5** zu erkennen ist, erstreckt sich die Säule 16 zwischen der unteren und der oberen Haltevorrichtung 3, 4 mit welchen sie wirkverbunden ist und eine stabile Einheit bildet, welche jedoch bei Bedarf zerlegt werden kann.

Die untere und die obere Haltevorrichtung 3, 4 weisen in der gezeigten Ausführungsvariante eine plattenförmige und damit vergleichsweise flache, platzsparende Ausgestaltung auf. Wie aus den **Figuren 1-3** und **5** hervorgeht, ist die untere Haltevorrichtung 3 über Linearlager (Wagen) 18 auf in Längsrichtung (x-Richtung) parallel zu den Holmen 8 verlaufenden Schienen 19 auf einem Maschinenbett (nicht näher dargestellt) der Spritzgiessmaschine in vertikaler Richtung (z-Richtung) abgestützt. Diese Lagerung in vertikaler Richtung dient primär zur Aufnahme der Gewichtslasten der Haltevorrichtung 2 und des ein- oder mehrteiligen drehbaren Mittelteils 5.

Bei Bedarf ist die untere Haltevorrichtung 3 zusätzlich über erste Lagerschalen 20 in Umfangsrichtung (mit Bezug auf die Drehachse 17) an den Holmen 8 abgestützt. Die gezeigte Ausführungsform weist insgesamt vier erste Lagerschalen 20 auf, welche als Halbschalen ausgebildet sind und von innen her an den unteren Holmen 8 abstützen. Damit können die Reaktionskräfte, welche beim Drehen des mindestens einen drehbaren Mittelteils 5 um die Säule 16 auftreten, zumindest teilweise auf die Holmen 8 übertragen und diese abgefangen und damit die Belastung der Linearlager 18, bzw. der Schienen 19 gezielt reduziert werden. Weil die ersten Lagerschalen bezüglich der Drehachse 17 radial weiter aussen angeordnet sein können, können die Kräfte zusätzlich reduziert werden. Ein Vorteil besteht darin, dass das mindestens eine Mittelteil 5 schneller gedreht werden kann, bzw. die Vorrichtung einen robusteren Aufbau aufweist. Je nach Ausführungsform können die Linearlager 18 und die Schienen 19 auch weggelassen werden und die Kräfte z.B. über die unteren und/oder die oberen Holmen 8 oder ein z.B. oberhalb der oberen Holmen 8 angeordnetes Schienensystem aufgenommen werden.

Die obere Haltevorrichtung 4 ist über zweite Lagerschalen 21 an den oberen Holmen 8 abgestützt. Die zweiten Lagerschalen 21 umgreifen die oberen Holmen 8 von oben. Damit können sie zumindest einen Teil der Gewichtslasten aufnehmen. Gleichzeitig können sie zur Abstützung des Antriebsmomentes dienen.

Wie aus den **Figuren 4** und **5** ersichtlich ist, weisen das Unterteil 6 und das Oberteil 7 im Innern je eine Hülse 22, 23 auf, mittels denen sie gegenüber der Säule 16, bzw. der unteren und der oberen Haltevorrichtung 3, 4 über Axiallager 24 und Radiallager 25 direkt oder indirekt gelagert sind. Wie zu erkennen ist, sind die Radiallager 25 zwischen dem Unterteil 6, bzw. dem Oberteil 7 und der Säule 16 angeordnet. Axiallager 24 dienen zur Abstützung des Unterteils 6 gegenüber der unteren Haltevorrichtung 3. Weitere Axiallager 24 sind zwischen der oberen Haltevorrichtung 4 und dem Oberteil 7, sowie zwischen dem Unterteil 6 und dem Oberteil 7 angeordnet.

Die Säule 16 weist im Innern Kanäle 26 auf, welche mit auf der Innenseite der Hülsen 22, 23 angeordneten Nuten 27 wirkverbunden sind und zum Austausch von Medien (z.B. Kühlflüssigkeit, Hydrauliköl, Pressluft, usw.) dienen. Die Kanäle 26 enden bevorzugt im Bereich der unteren und/oder der oberen Haltevorrichtung 3, 4, wo sie mit entsprechenden Schläuchen z.B. über Schnellkupplungen wirkverbunden sind (beides nicht weiter dargestellt). Die Einzelnen Kreisläufe sind durch Dichtungen (nicht näher dargestellt) getrennt. Durch die erfindungsgemässe Medienübergabe im Innern können mehr als ein drehbares Mittelteil 6, 7 vorgesehen werden.

An der unteren, bzw. an der oberen Haltevorrichtung 3, 4 ist je ein Antriebsmotor 28, 29 befestigt. Der untere Antriebsmotor 28 ist über ein unteres Getriebe 30 mit dem drehbaren Unterteil 6 und der obere Antriebsmotor 29 ist über ein oberes Getriebe 31 mit dem drehbaren Oberteil 7 wirkverbunden. Die Antriebsmotoren 28, 29 dienen zum Antreiben des Unterteils 6, bzw. des Oberteils 7 und die Säule 16, bzw. um die Drehachse 17. Falls nur ein drehbares Mittelteil 5 auf der Säule 16 angeordnet ist, kann unter Umständen auf einer der beiden Antriebe bestehend aus Getriebe und Motor verzichtet werden. Die beschriebene Vorrichtung ermöglicht es, das Unterteil 6 und das Oberteil 7 unabhängig voneinander um die Säule 16 gleich oder gegenläufig zu rotieren. Alternativ oder in Ergänzung kann ein Antriebsmotor in eines der drehbaren Mittelteile 6, 7 integriert sein.

Die erfindungsgemässe Spritzgiessvorrichtung 1 ermöglicht es, unterschiedliche oder gleiche Teile auf einer unteren und einer oberen Herstellungsebene 32, 33, welche schematisch in **Figur 3** dargestellt sind, losgelöst von einander herzustellen.

Auf der unteren Herstellungsebene 32 können erste Teile (nicht näher dargestellt), welche aus einer oder mehreren Materialkomponenten bestehen, durch das Zusammenwirken der ersten inneren Formhälften 13 mit den ersten äusseren Formhälften 11 im Bereich einer ersten und einer zweiten Trennebene 34, 35 hergestellt werden.

Zweite Teile, welche ebenfalls aus einer oder mehreren Materialkomponenten bestehen können, können auf der oberen Herstellungsebene 33 hergestellt werden, indem die zweiten inneren Formhälften 14 mit den zugeordneten zweiten äusseren Formhälften 12 ebenfalls im Bereich der ersten und der zweiten Trennebene 34, 35 zusammenwirken. Die Spritgiessvorrichtung wird im Bereich der ersten und der zweiten Trennebene 34, 35 durch relatives Verschieben der Formaufspannplatten 9, 10, bzw. der daran befestigten ersten und zweiten äusseren Formhälften gegenüber den an den drehbaren Mittelteilen 6, 7 befestigten ersten und zweiten inneren Formhälften 13, 14 geöffnet.

Bei Bedarf umfasst die Spritzgiessvorrichtung 1 mindestens ein Handlingsystem (nicht näher dargestellt), welches z.B. dazu dient, Teile von der unteren in die obere Herstellungsebene 32, 33 zu transportieren und/oder Teile aus der Spritzgiessvorrichtung 1 zu entnehmen oder in diese einzusetzen.

Die Erfindung ermöglicht es, sehr komplexe Teile in einer erfindungsgemässen Spritzgiessvorrichtung 1 herzustellen. Z.B. werden in der unteren Herstellungsebene im Bereich der ersten Trennebene 34 ein oder gleichzeitig mehrere erste Teile gefertigt, welche dann beim Öffnen der Spritzgeissvorrichtung entlang der beiden Trennebenen 34, 35 an den ersten inneren Formhälften haften bleiben und durch Drehen des unteren drehbaren Mittelteils (auch Unterteil genannt) 6 und die Drehachse 17 von der ersten in die zweite Trennebene gefördert wird. Nach erneutem Schliessen der Spritzgiessvorrichtung 1 werden z.B. die Teile mit einer weiteren oder derselben Materialkomponente überspritzt, bzw. wirkverbunden. Während dem Drehen von der ersten in die zweite Trennebene können weitere Teile, z.B. von aussen mit einem Handlingsystem zugeführte Teile, mit den ersten Teilen wirkverbunden und/oder in die Kavitäten eingelegt werden. Derselbe oder ein anderer Ablauf kann auf der oberen Herstellungsebene ablaufen. Weiterhin besteht die Möglichkeit, die Teile aus der unteren in die obere Herstellungsebene zu befördern (oder umgekehrt) und dort einem oder mehreren weiteren Bearbeitungsschritten zu unterziehen. Alternativ oder in Ergänzung können Teile aus der unteren und Teile aus der oberen Herstellungsebene auch erst aus der Spritzgiessvorrichtung entnommen und ausserhalb miteinander wirkverbunden werden. Beliebige weitere Ausführungsformen von Herstellungsprozessen sind mit der erfindungsgemässen Spritzgiessvorrichtung 1 einfach zu realisieren.

Die untere Haltevorrichtung 3 weist einen unteren Mittelblock 36 und die obere Haltevorrichtung 4 einen oberen Mittelblock 37 auf. An diesen Mittelblöcken 36, 37, welche vorzugsweise als Normteile ausgestaltet sind, sind über erste und zweite Adapter 38, 39 die ersten und die zweiten Lagerschalen 20, 21 an den ihnen zugeordneten Mittelblöcken 36, 37 befestigt.

Je nach Anwendungsgebiet und Ausgestaltung kann auf eine, z.B. die obere Haltevorrichtung 4 verzichtet werden. Insbesondere falls nur ein drehbares Mittelteil auf der Säule 16 angeordnet ist. Insbesondere dann wenn die untere Haltevorrichtung gleichzeitig über Linearlager 18 und Schienen 19 auf dem Maschinenbett und über erste Lagerschalen gegenüber den unteren Holmen in Umfangsrichtung abgestützt sind.

### LISTE DER BEZUGSZEICHEN

| | | | |
|---|---|---|---|
| 1 | Spritzgiessvorrichtung | 21 | zweite Lagerschalen |
| 2 | Haltevorrichtung | 22 | Untere Hülse |
| 3 | untere Haltevorrichtung (Haltevorrichtung) | 23 | Obere Hülse |
| | | 24 | Axiallager |
| 4 | obere Haltevorrichtung (Haltevorrichtung) | 25 | Radiallager |
| | | 26 | Kanal |
| 5 | drehbares Mittelteil | 27 | Nut |
| 6 | Unterteil (drehbares Mittelteil) | 28 | Unterer Antriebsmotor |
| 7 | Oberteil (drehbares Mittelteil) | 29 | Oberer Antriebsmotor |
| 8 | Holmen | 30 | Unteres Getriebe |
| 9 | erste Formaufspannplatte | 31 | Oberes Getriebe |
| 10 | zweite Formaufspannplatte | 32 | Untere Herstellungsebene |
| 11 | erste äussere Formhälften | 33 | Obere Herstellungsebene |
| 12 | zweite äussere Formhälften | 34 | erste Trennebene |
| 13 | erste innere Formhälften | 35 | zweite Trennebene |
| 14 | zweite innere Formhälften | 36 | Unterer Mittelblock (untere Haltevorrichtung) |
| 15 | Spritzgiesswerkzeug | | |
| 16 | Säule | 37 | Oberer Mittelblock (obere Haltevorrichtung) |
| 17 | Drehachse | | |
| 18 | Linearlager (Wagen) | 38 | erster Adapter |
| 19 | Schienen | 39 | zweiter Adapter |
| 20 | erste Lagerschalen | | |

## Patentansprüche

1. Spritzgiessvorrichtung (1) mit
a. mindestens einer ersten und mindestens einer zweiten äusseren Formhälfte (11, 12), welche in einer ersten Richtung (x) gegeneinander verschiebbar angeordnet sind, und
b. einem zwischen diesen angeordneten um eine Drehachse (17), drehbaren Mittelteil (5), welcher
c. ein Unterteil (6) aufweist, an dem paarweise erste innere Formhälften (13) angebracht sind, und
d. ein unabhängig vom Unterteil (6) drehbares Oberteil (7) aufweist, an dem paarweise zweite innere Formhälften (14) angebracht sind, welche
e. erste und zweite innere Formhälften (13, 14) in einer Schliessstellung mit ihnen zugeordneten ersten und zweiten äusseren Formhälften (11, 12) zur Bildung von Kavitäten zusammenwirken, wobei
f. die ersten und die zweiten inneren Formhälften (13, 14) und die ihnen zugeordneten ersten und zweiten äusseren Formhälften eine untere und eine obere Herstellungsebene (32, 33) bilden.

2. Spritzgiessvorrichtung (1) gemäss Patentanspruch 1, **dadurch gekennzeichnet, dass** die Spritzgiessvorrichtung (1) eine Haltevorrichtung (2) umfasst, welche zur Halterung des drehbaren Mittelteils (5) in einer Spritzgiessmaschine dient.

3. Spritzgiessvorrichtung (1) gemäss Patentanspruch 2, **dadurch gekennzeichnet, dass** die Haltevorrichtung (2) eine Säule (16) aufweist, um welche das Unterteil (6) und das Oberteil (7) des drehbaren Mittelteils (5) drehbar angeordnet sind.

4. Spritzgiessvorrichtung (1) gemäss Patentanspruch 3, **dadurch gekennzeichnet, dass** die Säule (16) an ihrem unteren Ende an einer unteren Haltevorrichtung (3) befestigt ist.

5. Spritzgiessvorrichtung (1) gemäss Patentanspruch 4, **dadurch gekennzeichnet, dass** die untere Haltevorrichtung (3) über Linearlager (18) auf Schienen (19) abgestützt ist.

6. Spritzgiessvorrichtung (1) gemäss Patentanspruch 4 oder 5, **dadurch gekennzeichnet, dass** die untere Haltevorrichtung (3) über erste Lagerschalen (20) gegenüber Holmen (8) gelagert ist.

7. Spritzgiessvorrichtung (1) gemäss einem der Patentansprüche 3 bis 6, **dadurch gekennzeichnet, dass** die untere Haltevorrichtung (3) einen unteren Mittelblock (36) aufweist, an dem direkt oder indirekt die Linearlager (18) und/oder die ersten Lagerschalen (20) befestigt sind.

8. Spritzgiessvorrichtung (1) gemäss Patentanspruch 7, **dadurch gekennzeichnet, dass** die Linearlager und/oder die ersten Lagerschalen (20) über erste Adapter (38) am unteren Mittelblock (36) befestigt sind.

9. Spritzgiessvorrichtung (1) gemäss einem der Patentansprüche 3 bis 8, **dadurch gekennzeichnet, dass** der Unterteil (6) über einen unteren Antriebsmotor (28) und ein unteres Getriebe (30) um die Drehachse (17) drehbar angetrieben ist.

10. Spritzgiessvorrichtung (1) gemäss einem der Patentansprüche 3 bis 9, **dadurch gekennzeichnet, dass** die Säule (16) an ihrem oberen Ende an einer oberen Haltevorrichtung (4) befestigt ist.

11. Spritzgiessvorrichtung (1) gemäss Patentanspruch 10, **dadurch gekennzeichnet, dass** die obere Haltevorrichtung (4) über zweite Lagerschalen (21) gegenüber Holmen (8) gelagert ist.

12. Spritzgiessvorrichtung (1) gemäss Patentanspruch 11, **dadurch gekennzeichnet, dass** die obere Haltevorrichtung (4) einen oberen Mittelblock (37) aufweist, an dem direkt oder indirekt die zweiten Lagerschalen (21) befestigt sind.

13. Spritzgiessvorrichtung (1) gemäss Patentanspruch 12, **dadurch gekennzeichnet, dass** die zweiten Lagerschalen (21) über zweite Adapter (39) am oberen Mittelblock (37) befestigt sind.

14. Spritzgiessvorrichtung (1) gemäss einem der Patentansprüche 10 bis 13, **dadurch gekennzeichnet, dass** der Oberteil (7) über einen oberen Antriebsmotor (29) und ein oberes Getriebe (31) um die Drehachse (17) drehbar angetrieben ist.

15. Spritzgiessvorrichtung (1) gemäss einem der Patentansprüche 3 bis 8, **dadurch gekennzeichnet, dass** die Säule (16) im Innern mindestens einen Kanal (26) aufweist, welcher zur Medienübergabe an das Mittelteil (5) dient.

16. Spritzgiessvorrichtung (1) gemäss Patentanspruch 15, **dadurch gekennzeichnet, dass** der mindestens eine Kanal (26) in mindestens eine Nut (27) mündet, welche zwischen der Säule (16) und dem Mittelteil (5) angeordnet ist.

## Claims

1. Injection moulding device (1), comprising
a. at least one first and at least one second outer mould half (11, 12), which are arranged such that they can be displaced towards one another in a first direction (x), and
b. a centre part (5), which is arranged therebetween and can be rotated about an axis of rotation (17), which
c. comprises a bottom part (6), to which first inner mould halves (13) are attached in pairs, and
d. comprises a top part (7), which can be rotated independently of the bottom part (6) and to which second inner mould halves (14) are attached in pairs, which
e. first and second inner mould halves (13, 14) in a closed position interact with first and second outer mould halves (11, 12) assigned thereto to form cavities, wherein
f. the first and second inner mould halves (13, 14) and the first and second outer mould halves assigned thereto form a lower and an upper production plane (32, 33).

2. Injection moulding device (1) according to Patent Claim 1, **characterized in that** the injection moulding device (1) includes a holding device (2), which serves to hold the rotatable centre part (5) in an injection moulding machine.

3. Injection moulding device (1) according to Patent Claim 2, **characterized in that** the holding device (2) comprises a column (16), about which the bottom part (6) and the top part (7) of the rotatable centre part (5) are rotatably arranged.

4. Injection moulding device (1) according to Patent Claim 3, **characterized in that** the column (16) is fastened at its lower end to a lower holding device (3) .

5. Injection moulding device (1) according to Patent Claim 4, **characterized in that** the lower holding device (3) is supported on rails (19) via linear bearings (18).

6. Injection moulding device (1) according to Patent Claim 4 or 5, **characterized in that** the lower holding device (3) is mounted with respect to tie bars (8) via first bearing shells (20).

7. Injection moulding device (1) according to one of Patent Claims 3 to 6, **characterized in that** the lower holding device (3) comprises a lower centre block (36), to which the linear bearings (18) and/or the first bearing shells (20) are directly or indirectly fastened.

8. Injection moulding device (1) according to Patent Claim 7, **characterized in that** the linear bearings and/or the first bearing shells (20) are fastened to the lower centre block (36) via first adapters (38).

9. Injection moulding device (1) according to one of Patent Claims 3 to 8, **characterized in that** the bottom part (6) is driven rotatably about the axis of rotation (17) by way of a lower drive motor (28) and a lower transmission (30).

10. Injection moulding device (1) according to one of Patent Claims 3 to 9, **characterized in that** the column (16) is fastened at its upper end to an upper holding device (4).

11. Injection moulding device (1) according to Patent Claim 10, **characterized in that** the upper holding device (4) is mounted with respect to tie bars (8) via second bearing shells (21).

12. Injection moulding device (1) according to Patent Claim 11, **characterized in that** the upper holding device (4) comprises an upper centre block (37), to which the second bearing shells (21) are directly or indirectly fastened.

13. Injection moulding device (1) according to Patent Claim 12, **characterized in that** the second bearing shells (21) are fastened to the upper centre block (37) via second adapters (39).

14. Injection moulding device (1) according to one of Patent Claims 10 to 13, **characterized in that** the top part (7) is driven rotatably about the axis of rotation (17) by way of an upper drive motor (29) and an upper transmission (31).

15. Injection moulding device (1) according to one of Patent Claims 3 to 8, **characterized in that** the column (16) comprises, in the interior, at least one channel (26), which serves to transfer media to the centre part (5).

16. Injection moulding device (1) according to Patent Claim 15, **characterized in that** the at least one channel (26) opens out into at least one groove (27), which is arranged between the column (16) and the centre part (5).

## Revendications

1. Dispositif de moulage par injection (1) comprenant :
a. au moins une première et au moins une deuxième moitié de moule extérieure (11, 12), qui sont agencées de manière mobile l'une par rapport à l'autre dans une première direction (x), et
b. une partie centrale (5) agencée entre celles-ci, rotative autour d'un axe de rotation (17), qui
c. comprend une partie inférieure (6), sur laquelle des premières moitiés de moule intérieures (13) sont disposées par paires, et
d. une partie supérieure (7) rotative indépendamment de la partie inférieure (6), sur laquelle des deuxièmes moitiés de moule intérieures (14) sont disposées par paires, lesquelles
e. premières et deuxièmes moitiés de moule intérieures (13, 14) coopèrent dans une position de fermeture avec des premières et deuxièmes moitiés de moule extérieures (11, 12), qui leur sont associées, pour la formation de cavités,
f. les premières et les deuxièmes moitiés de moule intérieures (13, 14) et les premières et deuxièmes moitiés de moule extérieures qui leur sont associées formant un plan de production inférieur et supérieur (32, 33) .

2. Dispositif de moulage par injection (1) selon la revendication 1, **caractérisé en ce que** le dispositif de moulage par injection (1) comporte un dispositif de maintien (2), qui sert au maintien de la partie centrale rotative (5) dans une machine de moulage par injection.

3. Dispositif de moulage par injection (1) selon la revendication 2, **caractérisé en ce que** le dispositif de maintien (2) comprend une colonne (16), autour de laquelle la partie inférieure (6) et la partie supérieure (7) de la partie centrale rotative (5) sont agencées de manière rotative.

4. Dispositif de moulage par injection (1) selon la revendication 3, **caractérisé en ce que** la colonne (16) est fixée à un dispositif de maintien inférieur (3) à son extrémité inférieure.

5. Dispositif de moulage par injection (1) selon la revendication 4, **caractérisé en ce que** le dispositif de maintien inférieur (3) est soutenu par l'intermédiaire de paliers linéaires (18) sur des rails (19).

6. Dispositif de moulage par injection (1) selon la revendication 4 ou 5, **caractérisé en ce que** le dispositif de maintien inférieur (3) est monté par l'intermédiaire de premiers coussinets (20) par rapport à des chapeau (8) .

7. Dispositif de moulage par injection (1) selon l'une quelconque des revendications 3 à 6, **caractérisé en ce que** le dispositif de maintien inférieur (3) comprend un bloc central inférieur (36), auquel les paliers linéaires (18) et/ou les premiers coussinets (20) sont fixés directement ou indirectement.

8. Dispositif de moulage par injection (1) selon la revendication 7, **caractérisé en ce que** les paliers linéaires et/ou les premiers coussinets (20) sont fixés au bloc central inférieur (36) par l'intermédiaire de premiers adaptateurs (38).

9. Dispositif de moulage par injection (1) selon l'une quelconque des revendications 3 à 8, **caractérisé en ce que** la partie inférieure (6) est entraînée en rotation autour de l'axe de rotation (17) par l'intermédiaire d'un moteur d'entraînement inférieur (28) et d'une transmission inférieure (30).

10. Dispositif de moulage par injection (1) selon l'une quelconque des revendications 3 à 9, **caractérisé en ce que** la colonne (16) est fixée à un dispositif de maintien supérieur (4) à son extrémité supérieure.

11. Dispositif de moulage par injection (1) selon la revendication 10, **caractérisé en ce que** le dispositif de maintien supérieur (4) est monté par l'intermédiaire de deuxièmes coussinets (21) par rapport à des chapeau (8).

12. Dispositif de moulage par injection (1) selon la revendication 11, **caractérisé en ce que** le dispositif de maintien supérieur (4) comprend un bloc central supérieur (37), auquel les deuxièmes coussinets (21) sont fixés directement ou indirectement.

13. Dispositif de moulage par injection (1) selon la revendication 12, **caractérisé en ce que** les deuxièmes coussinets (21) sont fixés au bloc central supérieur (37) par l'intermédiaire de deuxièmes adaptateurs (39).

14. Dispositif de moulage par injection (1) selon l'une quelconque des revendications 10 à 13, **caractérisé en ce que** la partie supérieure (7) est entraînée en rotation autour de l'axe de rotation (17) par l'intermédiaire d'un moteur d'entraînement supérieur (29) et d'une transmission supérieure (31).

15. Dispositif de moulage par injection (1) selon l'une quelconque des revendications 3 à 8, **caractérisé en ce que** la colonne (16) comprend au moins un canal (26) à l'intérieur, qui sert au transfert de fluides vers la partie centrale (5).

16. Dispositif de moulage par injection (1) selon la revendication 15, **caractérisé en ce que** l'au moins un canal (26) débouche dans au moins une rainure (27), qui est agencée entre la colonne (16) et la partie centrale (5) .
